# FASCICULE DE BREVET EUROPEEN

(11) **EP 3 778 383 B1**
(45) Date de publication et mention de la délivrance du brevet: **06.10.2021**
(21) Numéro de dépôt: 20189021.7
(22) Date de dépôt: 31.07.2020
(51) Int. Cl.: B64C 7/02, B64D 15/04, B64D 29/00

(54) **PARTIE ANTÉRIEURE DE NACELLE D'UN ENSEMBLE PROPULSIF D'AÉRONEF COMPORTANT UNE ZONE DE TRANSITION THERMIQUE**
FRONTTEIL EINER GONDEL EINER ANTRIEBSGRUPPE EINES LUFTFAHRZEUGS, DAS EINE THERMISCHE ÜBERGANGSZONE UMFASST
FORWARD SECTION OF NACELLE OF AN AIRCRAFT PROPULSION ASSEMBLY COMPRISING A THERMAL TRANSITION ZONE

(30) Priorité: 13.08.2019 FR 1909181
(43) Date de publication de la demande: 17.02.2021
(73) Titulaire: AIRBUS OPERATIONS (S.A.S.), 31060 Toulouse (FR)
(72) Inventeur: PORTE, Alain, 31060 TOULOUSE Cedex 9 (FR); VINCHES, Frédéric, 31060 TOULOUSE Cedex 9 (FR)
(74) Mandataire: Gicquel, Olivier Yves Gérard

(56) Documents cités:
- EP-A1- 3 501 991
- US-A1- 2012 048 389
- US-A1- 2017 096 238

## Description

La présente invention concerne les ensembles propulsifs d'aéronef et plus particulièrement les nacelles des ensembles propulsifs d'aéronef.

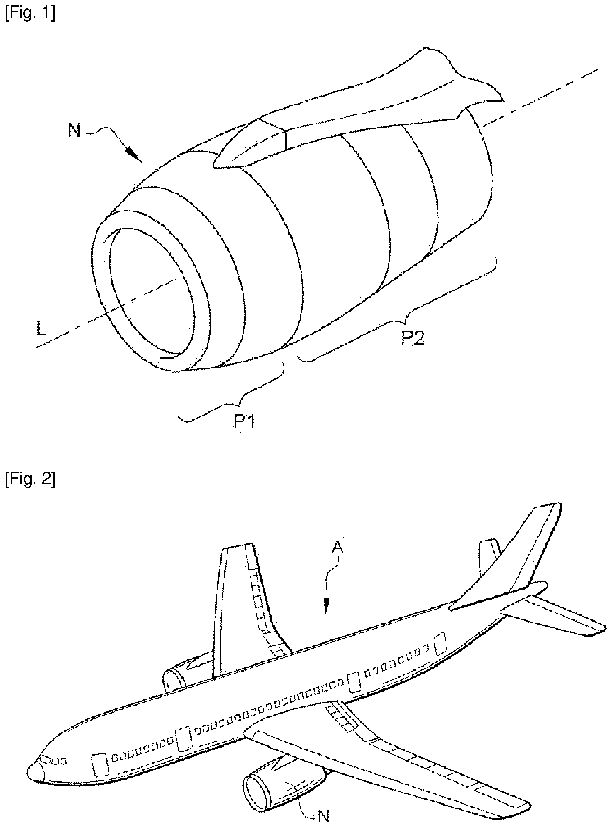

Un ensemble propulsif est un dispositif permettant de générer une poussée, qui constitue la force motrice de l'aéronef équipé de l'ensemble propulsif. Un ensemble propulsif d'aéronef est représenté à titre d'exemple à la figure 1.

Un exemple d'implantation classique d'une nacelle N d'un ensemble propulsif sur un aéronef A est représenté à la figure 2.

La nacelle comporte classiquement une partie antérieure P1 formant entrée d'air. La partie antérieure P1 a pour rôle de capter l'air de façon à assurer un écoulement régulier vers la soufflante. La nacelle comporte par ailleurs une partie principale P2, constituant le reste de ladite nacelle.

L'ensemble propulsif s'étend généralement autour d'un axe appelé par la suite axe longitudinal L. Du fait de la forme sensiblement cylindrique qu'a généralement la nacelle autour de l'axe longitudinal L, toute droite sécante de l'axe L perpendiculairement à ce dernier est dite radiale.

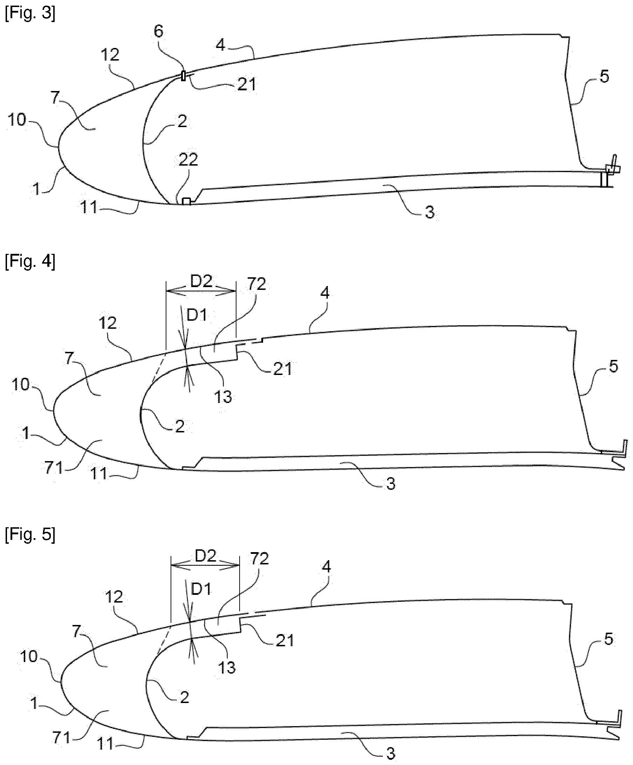

Une structure classique de partie antérieure P1 de nacelle d'ensemble propulsif d'aéronef, telle que connue dans l'état de la technique, est décrite en référence à la figure 3.

La partie antérieure P1 de la nacelle comprend une lèvre d'entrée d'air 1, pouvant être annulaire ou sensiblement annulaire et qui est disposée à son extrémité avant.

Dans l'ensemble du présent document, les notions d'« avant » et d'« arrière », d'« antérieur » et de « postérieur » ainsi que d'« amont » et d'« aval » se comprennent selon la direction du flux d'air dans l'ensemble propulsif. Ainsi, l'air entre par l'avant de l'ensemble propulsif, c'est-à-dire par la partie antérieure P1 de la nacelle et ressort (après qu'une partie de l'air a servi en tant que comburant) par l'arrière de l'ensemble propulsif, c'est-à-dire par l'extrémité arrière de la partie principale P2.

En outre, dans l'ensemble du présent document, un élément « extérieur » désigne un élément radialement éloigné de l'axe longitudinal L, formant typiquement la limite du volume hors tout de la nacelle, tandis qu'un élément « intérieur » désigne un élément proche de l'axe longitudinal L. Par exemple, les flux primaire et secondaire d'un ensemble propulsif d'aéronef s'écoulent dans le conduit intérieur formé par la nacelle de l'ensemble propulsif.

La notion d'interne (à l'inverse de la notion d'externe) à la nacelle désigne la zone située dans l'épaisseur du profil aérodynamique formant ladite nacelle.

Selon la structure classique d'une partie antérieure P1 de l'ensemble propulsif, un cadre avant 2 est disposé à l'arrière de la lèvre d'entrée d'air 1. L'ensemble formé par la lèvre d'entrée d'air 1 et le cadre avant 2, est appelé ensemble « D-duct », selon l'expression anglophone consacrée du fait de la section en « D » du conduit ainsi formé. Le D-duct assure généralement une fonction de dégivrage au moyen d'air chaud amené dans cet ensemble depuis le moteur par un tube d'alimentation. On parle ainsi de conduit de dégivrage 7 pour désigner l'espace formé dans l'ensemble D-duct. Le cadre avant 2 peut prendre, de manière connue, différentes formes. Il peut présenter une section courbe, comme représenté à la figure 3, ou avoir une section droite, radiale, ou inclinée de sorte à présenter un bord intérieur plus en avant que son bord extérieur.

Une structure intérieure 3 prolonge vers l'arrière une partie intérieure 11 de la lèvre d'entrée d'air 1. La structure intérieure 3 peut correspondre à un panneau insonorisant, ou toute autre forme de paroi définissant un conduit canalisant l'air en direction de la motorisation située dans la partie principale de la nacelle.

Un panneau extérieur 4 prolonge vers l'arrière une partie extérieure 12 de la lèvre d'entrée d'air 1.

La limite entre la partie intérieure 11 et la partie extérieure 12 est formée par le bord d'attaque 10 de la lèvre d'entrée d'air 1. On entend par bord d'attaque le bord le plus en avant de la lèvre d'entrée d'air lorsque la nacelle est montée, et qui sépare l'extrados de l'intrados du profil aérodynamique de la nacelle. Le bord d'attaque 10 constitue généralement la ligne à l'avant de la nacelle où le rayon de courbure de la surface de la nacelle est minimal. Dans les exemples illustrés, les parties extérieure et intérieure sont sensiblement symétriques par rapport au bord d'attaque 10. Bien entendu, dans un autre exemple, la partie extérieure peut présenter une section plus grande que celle de la partie intérieure, ou inversement.

Un cadre de rigidification 5 également appelé cadre arrière définit la limite entre la partie antérieure P1 et la partie principale P2 de la nacelle.

Le cadre avant 2 comprend un premier bord périphérique 21 et un deuxième bord périphérique 22. Le premier bord périphérique 21 est généralement fixé au niveau de l'interface entre la lèvre d'entrée d'air 1 et le panneau extérieur 4. Cette liaison est réalisée sur des lignes périphériques de fixation ou de moyens d'assemblage 6, que l'on peut désigner par l'expression « coutures orbitales », par rivetage du cadre avant 2 au travers de l'épaisseur de la paroi externe. En pratique, la lèvre d'entrée d'air 1 ou le panneau extérieur 4 sont rivetés au premier bord périphérique 21 du cadre avant 2. Optionnellement, les rivets 6 peuvent former une liaison rigide commune entre la lèvre d'entrée d'air 1, le panneau extérieur 4 et le cadre avant 2.

L'air pénètre dans le conduit en D à très haute température, typiquement de l'ordre de 350°C voire 400°C, et y circule afin d'éviter la formation de givre sur la lèvre d'entrée d'air.

Or, le panneau extérieur 4 de la nacelle peut être réalisé en un matériau composite ou hybride composite/métallique. L'emploi d'un matériau composite permet un allègement important de la nacelle tout en garantissant des propriétés mécaniques (raideur, résistance) élevées. Les matériaux composites envisagés comportent notamment les matériaux composites à matrice organique et renforts par fibre de carbone et/ou d'aramide, ou autre fibre adaptée. De tels matériaux composites se dégradent cependant à une température sensiblement inférieure à la température de l'air circulant dans le conduit en D de dégivrage. Notamment, à une température supérieure à 150°C à 180°C, selon les matériaux composites, ces derniers sont susceptibles de se dégrader prématurément.

Le document EP 3 501 991 A1 divulgue un autre ensemble propulsif d'aéronef avec une partie antérieure de nacelle, qui comporte une lèvre d'entrée d'air à l'extrémité avant, une structure interne et un panneau externe prolongeant la lèvre, et un cadre de rigidification annulaire formé autour d'un axe de révolution et comprenant un bord périphérique interne lié à la structure interne et un bord périphérique externe lié au panneau externe.

Afin d'éviter une dégradation du panneau extérieur de la nacelle à proximité, la présente invention tend à proposer une configuration permettant d'éviter que ledit panneau extérieur ne soit exposé à une température trop élevée, en particulier au niveau de l'interface avec la lèvre d'entrée d'air.

Ainsi, l'invention concerne une partie antérieure de nacelle d'un ensemble propulsif d'aéronef, ladite partie antérieure ayant une extrémité avant permettant l'entrée d'air et une extrémité arrière destinée à être liée au reste de la nacelle, ladite partie antérieure comprenant une lèvre d'entrée d'air disposée à ladite extrémité avant et comprenant un bord d'attaque, une partie extérieure et une partie intérieure délimitées par ledit bord d'attaque, un panneau extérieur prolongeant une partie extérieure de la lèvre d'entrée d'air, une structure intérieure prolongeant la partie intérieure de la lèvre d'entrée d'air, un cadre avant disposé à l'arrière de la lèvre d'entrée d'air, ledit cadre avant comprenant un premier bord périphérique lié à ladite partie extérieure de la lèvre d'entrée d'air et/ou au panneau extérieur, et un deuxième bord périphérique lié à ladite structure intérieure et/ou à ladite partie intérieure de la lèvre d'entrée d'air, de sorte qu'un conduit de dégivrage est formé en avant du cadre avant, dans ladite lèvre d'entrée d'air. Le cadre avant est conformé de sorte que le conduit de dégivrage comporte une cavité principale, située directement en arrière du bord d'attaque, et une zone de transition thermique, ladite zone de transition thermique étant formée en arrière de la cavité principale entre une face interne de la partie extérieure de la lèvre d'entrée d'air et ledit cadre avant, ladite zone de transition thermique s'étendant sur une dimension longitudinale supérieure à sa dimension radiale moyenne. Le cadre avant forme, vis-à-vis de la face interne de la partie extérieure de la lèvre d'entrée d'air, un angle mesuré longitudinalement compris entre -20° et +10° sur la majorité de la zone de transition thermique, un angle de 0° correspondant à une direction d'extension parallèle à ladite face interne, un angle positif correspondant à un éloignement, de l'avant vers l'arrière, du cadre avant vis-à-vis de la face interne et un angle négatif correspondant à un rapprochement, de l'avant vers l'arrière, du cadre avant vis-à-vis de la face interne.

La partie antérieure ainsi constituée permet l'introduction d'air chaud, typiquement à 350°C ou plus dans le conduit de dégivrage, tout en permettant de protéger le panneau extérieur d'une surchauffe susceptible de le dégrader à proximité de sa liaison avec la lèvre d'entrée d'air.

Le cadre avant peut s'étendre longitudinalement à distance de la face interne de la partie extérieure de la lèvre d'entrée d'air sur une majorité de la dimension longitudinale de zone de transition thermique et se rapproche pour venir au contact de ladite face interne de la partie extérieure de la lèvre d'entrée d'air à l'arrière de la zone de transition thermique.

La dimension longitudinale de la zone de transition thermique est par exemple au moins deux fois supérieure à sa dimension radiale moyenne.

Le cadre avant peut s'étendre sensiblement parallèlement à la face interne de la partie extérieure de la lèvre d'entrée d'air sur la majorité de la dimension longitudinale de la zone de transition thermique.

Le cadre avant peut s'étendre de la structure intérieure jusqu'à proximité de la face interne de la partie extérieure de la lèvre d'entrée d'air, sans toutefois venir au contact de cette dernière, et, le long de la zone de transition thermique, s'écarter de ladite face interne avant de s'en rapprocher de nouveau pour venir à son contact à l'arrière de la zone de transition thermique.

La lèvre d'entrée d'air et le cadre avant peuvent être métalliques, et le panneau extérieur peut être en matériau composite ou en matériau hybride composite/métallique.

Le cadre avant peut être lié à la partie extérieure de la lèvre d'entrée d'air au niveau d'une interface de liaison entre ladite partie extérieure de la lèvre d'entrée d'air et ledit panneau extérieur.

La lèvre d'entrée d'air, le cadre avant et le panneau extérieur peuvent être liés entre eux sans élément rigide traversant rapporté.

L'invention porte également sur une nacelle de groupe propulsif d'aéronef comportant une partie antérieure telle que précédemment décrite, et comportant en outre des moyens de récupération d'air chaud au niveau d'un moteur équipant ladite nacelle, et d'introduction dudit air chaud dans le conduit de dégivrage.

D'autres particularités et avantages de l'invention apparaîtront encore dans la description ci-après en référence aux dessins annexés, donnés à titre d'exemples non limitatifs :
[Fig. 1] la figure 1 représente selon une vue schématique en trois dimensions un ensemble propulsif d'aéronef ;
[Fig. 2] la figure 2 représente un aéronef selon une vue schématique en trois dimensions,
[Fig. 3] la figure 3 représente selon une vue partielle de principe en coupe une partie antérieure d'une nacelle d'ensemble propulsif d'aéronef conforme à l'art antérieur ;
[Fig. 4] la figure 4 représente, selon une vue analogue à celle de la figure 3, une partie antérieure de nacelle ;
[Fig. 5] la figure 5 représente, selon une vue analogue à celle de la figure 3 et de la figure 4, une partie antérieure de nacelle ;
[Fig. 6] la figure 6 représente, selon une vue de principe partielle en coupe, une partie antérieure de nacelle ;
[Fig. 7] la figure 7 représente, selon une vue partielle en coupe, une partie antérieure de nacelle conforme à un premier mode de réalisation de l'invention ;
[Fig. 8] la figure 8 représente, selon une vue partielle en coupe, une partie antérieure de nacelle conforme à un deuxième mode de réalisation de l'invention ;
[Fig. 9] la figure 9 représente, selon une vue partielle en coupe transversale, un aspect du deuxième mode de réalisation de la figure 8 ;
[Fig. 10] la figure 10 représente, selon une vue partielle en coupe, en trois dimensions, une partie antérieure de nacelle.

Les figures 1 à 3, présentant des généralités sur les ensembles propulsifs d'aéronef et une configuration de partie antérieure de nacelle conforme à l'état de la technique ont été décrites ci-avant, en préambule du présent document. Les mêmes références que celles employées dans la description des figures 1 à 3 sont utilisées pour désigner les mêmes éléments dans la suite de la présente description.

La figure 4 représente une partie antérieure de nacelle d'un groupe propulsif d'aéronef. De manière analogue à la partie antérieure de nacelle décrit en référence à la figure 3, la partie antérieure de nacelle comporte une lèvre d'entrée d'air 1 prolongée en sa partie intérieure par une structure intérieure 3 telle qu'un panneau insonorisant, et une partie extérieure prolongée par un panneau extérieur 4.

Le panneau extérieur 4 est avantageusement réalisé en un matériau composite ou hybride métallique/composite.

Tout comme dans la figure 3, un conduit de dégivrage 7 est formé entre la lèvre d'entrée d'air 1 et le cadre avant 2.

Le conduit de dégivrage 7 comporte deux zones, à savoir une cavité principale 71 et une zone de transition thermique 72.

La cavité principale 71 est située directement en arrière du bord d'attaque 10 de la lèvre d'entrée d'air. La cavité principale 71 correspond à la zone de dégivrage la plus efficace du conduit de dégivrage 7, dans laquelle l'air circule à haute température de sorte à y présenter une relative homogénéité en température. La cavité principale peut avoir sensiblement la même section qu'un conduit de dégivrage classique, tel que celui de la figure 3, comme cela est représenté par la limite virtuelle, figurée en pointillés, entre ladite cavité principale 71 et la zone de transition thermique 72.

La zone de transition thermique 72 est quant à elle formée en arrière de la cavité principale 71, le long de la partie extérieure 12 de la lèvre d'entrée d'air 1. Plus particulièrement, la zone de transition thermique 72 est ménagée entre le cadre avant 2, à proximité de son premier bord périphérique 21, et une face interne 13 de la partie extérieure 12 de la lèvre d'entrée d'air 1.

La zone de transition thermique consiste en une partie du conduit de dégivrage 7 présentant une épaisseur ou dimension radiale D1 faible, en particulier comparativement à sa longueur ou plus généralement sa dimension longitudinale D2. Au-delà de la courbure inverse permettant au cadre de rejoindre la face interne 13, le cadre 2 avant ne s'éloigne sensiblement pas de la face interne 13 de la partie extérieure 12 de la lèvre sur une majorité de la longueur D2, à savoir plus de 50% de la longueur D2 : ce qui signifie que sur une majorité de la longueur D2, le cadre 2 se rapproche de la face interne 13 et/ou reste sensiblement parallèle à la face interne 13. Le cadre avant s'étend parallèlement à la face interne 13 de la partie extérieure 12 sur au moins 20% de la longueur D2.

Par sa configuration et sa position, la zone de transition thermique est peu propice à la circulation d'air, de sorte qu'il se crée un gradient de température entre la cavité principale 71 et le premier bord périphérique 21 du cadre 2 qui est situé en arrière de la zone de transition thermique.

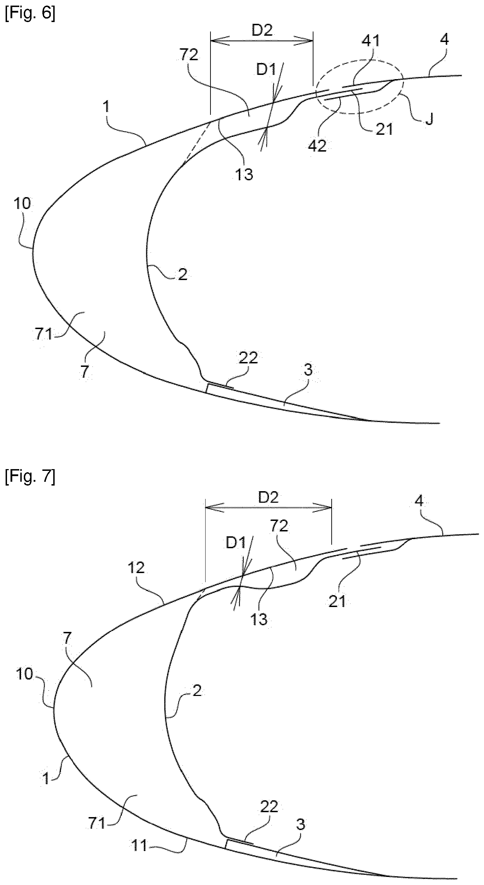

Pour l'obtention du gradient thermique souhaité, la dimension longitudinale D2 de la zone de transition thermique 72 est au moins deux fois supérieure à sa dimension radiale D1 moyenne. La dimension radiale D1 moyenne est évoquée car la dimension radiale D1 peut être variable le long (i.e. dans la direction longitudinale) de la zone de transition thermique 72, comme cela sera décrit ci-après à titre d'exemple en référence à la figure 7. De manière préférentielle, la dimension longitudinale D2 de la zone de transition thermique 72 est au moins deux fois supérieure à sa dimension radiale D1 en tout point de la zone de transition thermique 72.

La zone de transition thermique permet ainsi de maintenir une température acceptable, typiquement inférieure à 180°C ou à 150°C au niveau du bord avant du panneau extérieur 4, c'est-à-dire au niveau de la liaison entre la lèvre d'entrée d'air 1, le panneau extérieur 4, et le cadre avant 2, lorsque de l'air à 350°C à 400°C est introduit dans le conduit de dégivrage 7.

Selon la variante représentée à la figure 4, le cadre avant 2 est lié à la partie extérieure 12 de la lèvre d'entrée d'air, en avant de la jonction entre le ladite lèvre d'entrée d'air et le panneau extérieur 4.

La variante représentée à la figure 5 est identique à celle de la figure 4, à l'exception de la jonction du bord périphérique du cadre avant 2. Dans l'exemple de la figure 5, le cadre avant 2 est lié à la partie extérieure 12 de la lèvre d'entrée d'air 1, se prolonge en arrière de la lèvre d'entrée d'air 1, et est également lié au panneau extérieur 4 au niveau de sa prolongation en arrière de la lèvre d'entrée d'air 1.

La figure 4 et la figure 5 présentent des exemples, dans lesquels une zone de transition thermique 72 est formée présentant une dimension radiale constante, jusqu'à son extrémité arrière où le cadre 2 est lié à la partie extérieure de la lèvre d'entrée d'air au niveau de son interface de liaison avec le panneau extérieur 4.

Dans la pratique, la liaison entre le cadre avant et l'ensemble lèvre d'entrée d'air / panneau extérieur 4 peut être optimisée, de même que le cadre avant 2 peut être conformé de manière encore plus avantageuse. Cela est illustré en référence aux figures 6 à 9.

La figure 6 présente l'avant d'une partie antérieure de nacelle de groupe propulsif d'aéronef, dans une configuration proche de celle représentée à la figure 4. Dans l'exemple représenté à la figure 6, le panneau extérieur 4 est réalisé en un matériau composite. La liaison entre le cadre avant 2, la lèvre d'entrée d'air 1, et le panneau extérieur 4 est réalisée dans une zone de jonction J. En particulier, dans la zone de jonction J est réalisé un empilement permettant une liaison du cadre avant 2 et de la lèvre d'entrée d'air 1 (en particulier de sa partie extérieure 12), ainsi qu'un emboîtement du premier bord périphérique 21 du cadre avant 2 et du panneau extérieur 4 permettant la liaison entre eux. Pour ce faire, le panneau extérieur comporte à son extrémité avant au moins deux plis 41, 42 entre lesquels est pris le cadre avant 2, qui est ainsi emboîté entre lesdits plis 41, 42. Le cadre avant peut être optionnellement collé entre les deux plis 41, 42.

Pour réaliser une telle jonction, le premier bord périphérique 21 du cadre avant 2 doit s'étendre parallèlement et au contact du bord arrière de la lèvre d'entrée d'air 1 et du bord avant du panneau extérieur 4. Ainsi, la zone de transition thermique 72 présente, vue en section, une dimension radiale D1 sensiblement constante sur une majorité de sa dimension longitudinale D2, et se restreint vers l'arrière du fait d'une double courbure du cadre avant 2 permettant audit cadre avant 2 de se rapprocher de la face interne 13 de la partie extérieure 12 de la lèvre d'entrée d'air 1, de la tangenter et de la longer, au contact, dans la zone de jonction J.

De même, la limite entre la cavité principale 71 et la zone de transition thermique 72 peut être conformée pour présenter une forme régulière et arrondie. Une telle configuration arrondie et présentant une liaison du cadre en arrière par rapport à l'aplomb de sa direction principale d'extension permet, outre des avantages en matière de protection thermique du panneau extérieur 4, de gérer la dilatation thermique du cadre avant 2.

En effet, le cadre avant, généralement en métal, par exemple en titane, est sujet à une importante dilatation thermique pouvant se traduire par une déformation importante due à de grands écarts de température qu'il subit et vis-à-vis du reste de la nacelle. En effet, l'air à l'intérieur de la nacelle s'écoule dans le conduit de dégivrage à une température avoisinant les 400°C, tandis qu'à l'extérieur de la nacelle, la température de l'air avoisine des valeurs négatives de l'ordre de -50° C. L'écart de température entre l'intérieur et l'extérieur de la nacelle provoque la dilatation différentielle du cadre avant vis-à-vis des parois extérieures de la nacelle.

La formation d'une zone de transition thermique permet ainsi, en plus de la protection thermique du panneau extérieur 4, une dilatation du cadre avant 2 sans que ce dernier ne déforme la partie extérieure de la lèvre d'entrée d'air, ce qui aurait pour conséquence d'en altérer le profil aérodynamique. L'épaisseur du cadre avant peut être réduite dans la zone de transition thermique, par exemple comprise entre 0,5 et 1 mm, de préférence de l'ordre de 0,8 mm. Ainsi, cette partie du cadre avant présentant une faible épaisseur et le cas échéant une faible courbure, peut faire office d'amortisseur de dilatation.

La figure 7 représente, selon une vue analogue à celle de la figure 6, un premier mode de réalisation de l'invention. Dans ce mode de réalisation, la dimension radiale D1 de la zone de transition thermique 72 est variable le long de ladite zone de transition thermique 72. En particulier, le cadre avant est à proximité immédiate de la face interne 13 de la partie extérieure 12 de la lèvre d'entrée d'air 1 à l'avant de la zone de transition thermique 72. Néanmoins, il n'y a pas de contact entre le cadre avant 2 et la lèvre d'entrée d'air à ce niveau. Cela permet une communication entre la cavité principale et la zone de transition thermique, qui permet la création du gradient de température souhaité, ainsi que la déformation du cadre avant sans altérer le profil aérodynamique. En allant vers l'arrière de la zone de transition thermique, le cadre avant 2 s'éloigne de la face interne 13 de la partie extérieure 12 de la lèvre d'entrée d'air 1. Puis, tout comme dans le mode de réalisation de la figure 4, le cadre avant se rapproche de nouveau de la face interne 13 de la partie extérieure 12 de la lèvre d'entrée d'air 1 afin que son premier bord périphérique vienne à son contact de manière tangente, pour réaliser une jonction entre le cadre avant, la lèvre d'entrée d'air 1, et le panneau extérieur 4, analogue à celle décrite en référence à la figure 6.

La zone de transition thermique 72 présente ainsi une restriction à son entrée, ce qui limite le passage d'air chaud, tout en présentant un volume et donc une inertie thermique assurant la protection du panneau extérieur 4.

De nombreuses autres configurations du cadre avant peuvent être envisagées. Le cadre avant peut notamment être décrit par son orientation longitudinale comparativement à celle de la partie extérieure 12 de la lèvre d'entrée d'air 1, c'est-à-dire par l'angle formé par rapport à la face interne 13 de la partie extérieure 12.

Cet angle est compris entre -20° et +10° sur l'ensemble de la zone de transition thermique à l'exception de la double courbure du cadre avant 2 lui permettant de rejoindre la face interne 13 de la partie extérieure 12 de la lèvre d'entrée d'air 1, un angle de 0° correspondant à une direction d'extension parallèle à ladite face interne 13 de la partie extérieure 12 de la lèvre d'entrée d'air 1, un angle positif correspondant à un éloignement, de l'avant vers l'arrière, du cadre avant vis-à-vis de ladite face interne 13, un angle négatif correspondant à un rapprochement, de l'avant vers l'arrière, du cadre avant vis-à-vis de ladite face interne 13. Lorsque l'angle sort de la fourchette comprise entre -20° et +10°, on passe de la zone de transition thermique 72 à la cavité principale 71.

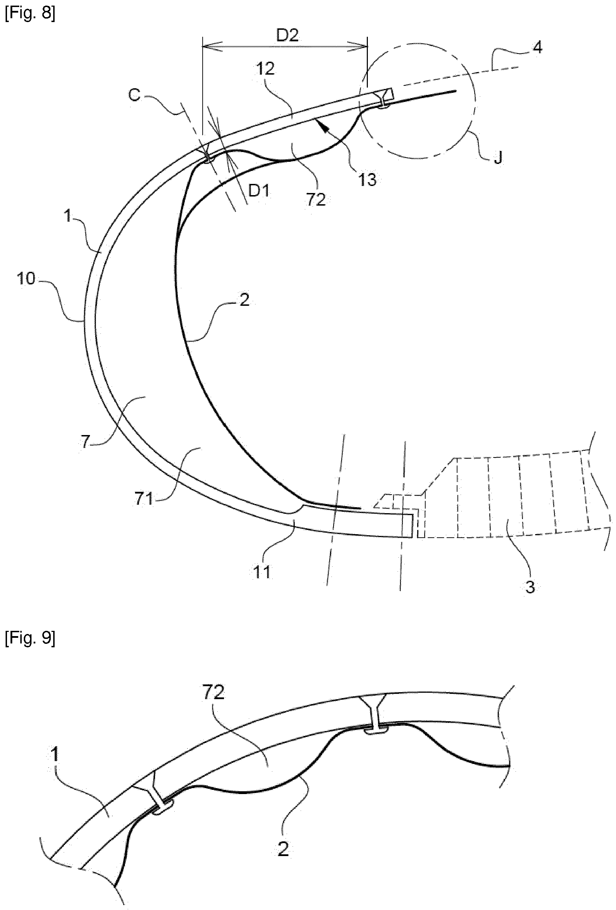

La figure 8 représente, selon une vue analogue à celle de la figure 6, un deuxième mode de réalisation de l'invention. Dans ce mode de réalisation, la dimension radiale D1 de la zone de transition thermique 72 est variable le long de la périphérie du cadre avant 2, tel que représenté à la figure 9, ce qui entraine également une variabilité de dimension le long de ladite zone de transition thermique 72. La figure 9 est une vue en coupe transversale selon le plan de coupe C représenté à la figure 8, et présentant une portion de la périphérie de la partie extérieure 12 de la lèvre d'entrée d'air 1 et de la périphérie du cadre avant 2. Tel que représenté à la figure 9, le cadre avant 2 est lié à la partie extérieure 12 de la lèvre d'entrée d'air en un certain nombre de points situés à l'entrée de la zone de transition thermique 72, et répartis régulièrement sur la périphérie dudit cadre avant 2. Ainsi, le long de la périphérie de partie extérieure 12 de la lèvre d'entrée d'air au niveau de l'entrée de la zone de transition thermique 72, le cadre avant 2 décrit une courbe sensiblement sinusoïdale qui le rapproche et l'éloigne successivement de ladite partie extérieure 12 de la lèvre d'entrée d'air 1. Le cadre avant 2 présente des courbures progressives et régulières dans la zone de transition thermique 72. Ainsi, dans la direction longitudinale de la zone de transition thermique, selon la section longitudinale considérée, la zone de transition thermique présente une dimension radiale plus ou moins variable. En particulier, la dimension radiale de la zone de transition thermique est essentiellement constante dans les sections longitudinales pour lesquelles le cadre avant 2 est le plus éloigné de la lèvre d'entrée d'air à l'entrée de la zone de transition thermique, et la dimension radiale de la zone de transition thermique est fortement variable pour les sections pour lesquelles le cadre avant 2 est au contact de et lié à la lèvre d'entrée d'air à l'entrée de la zone de transition thermique.

La configuration présentée aux figures 8 et 9 permet d'atténuer les vibrations dans le dispositif et améliore la protection, notamment contre les chocs aviaires, en offrant deux niveaux de fixation entre le cadre avant et la lèvre d'entrée d'air, à savoir une fixation avant discrète et une fixation arrière continue le long de la périphérie du cadre avant 2.

Dans le mode de réalisation de la figure 8, le cadre avant 2 peut optionnellement, et comme représenté à la figure 8, se prolonger en arrière de la lèvre d'entrée d'air 1. Le panneau extérieur 4 peut être fixé sur ce prolongement arrière du cadre avant 2, par exemple par collage.

Optionnellement, dans tous les modes de réalisation présentés ci-avant, une sortie d'air peut être prévue à l'arrière de la zone de transition thermique 72, au travers de la partie extérieure 12 de la lèvre d'entrée d'air 1.

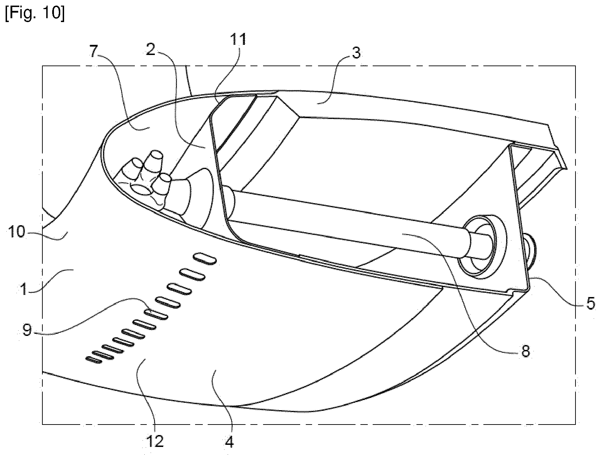

La figure 10 représente une vue partielle d'une partie antérieure de nacelle. Elle illustre en particulier un exemple de moyens d'introduction d'air chaud dans le conduit de dégivrage 7.

Les systèmes de dégivrage de nacelle prélèvent de l'air chaud sur les étages de compression du moteur équipant la nacelle. Un ensemble de tuyaux 8 amène l'air chaud jusqu'au conduit de dégivrage 7, dans la lèvre d'entrée d'air 1. En particulier, des tuyaux 8 traversent le cadre arrière ou de rigidification 5, sensiblement longitudinalement, puis traversent le cadre avant 2, afin de déboucher dans la lèvre d'entrée d'air 1.

Sur ces tuyaux sont installés des vannes permettant de contrôler le système en pression, débit, voire en température. Les vannes peuvent en particulier autoriser ou interrompre l'arrivée d'air chaud dans la lèvre d'entrée d'air, et assurer une fonction de régulation en pression de l'air chaud arrivant du moteur. L'air chaud est injecté dans le conduit de dégivrage 7 par des « tuyères » ou des tubes de type « picolo ». Cette injection met en circulation l'air chaud dans le conduit de dégivrage, ce qui permet le dégivrage du bord d'attaque de la nacelle. L'air peut ensuite s'évacuer par des ouvertures 9 situées sur la partie extérieure 12 de la lèvre d'entrée d'air, en amont de la zone de transition thermique créée dans l'invention.

La présente invention propose ainsi une structure de partie antérieure de nacelle permettant de protéger thermiquement le panneau extérieur prolongeant la lèvre d'entrée d'air, notamment lorsque ce panneau est en matériau composite ou hybride composite/métallique. Tout autre élément que le panneau extérieur qui serait situé à proximité du cadre de rigidification et qui serait susceptible de se dégrader thermiquement (par exemple une colle ou un adhésif situé dans la zone de jonction) peut également être protégé comme cela est proposé dans l'invention, par création d'une zone de transition thermique à l'arrière du conduit de dégivrage, grâce à une conformation adaptée du cadre avant. La création d'une zone de transition thermique a également pour conséquence de repousser vers l'arrière, vis-à-vis du cadre avant, la zone de jonction entre le cadre avant, la lèvre d'entrée d'air, et le panneau extérieur. Cela permet d'éviter les effets de la dilatation du cadre avant sur le profil aérodynamique de la nacelle.

## Revendications

1. Partie antérieure de nacelle d'un ensemble propulsif d'aéronef (A), ladite partie antérieure (P1) ayant une extrémité avant permettant l'entrée d'air et une extrémité arrière destinée à être liée au reste de la nacelle, ladite partie antérieure comprenant :
- une lèvre d'entrée d'air (1) disposée à ladite extrémité avant et comprenant un bord d'attaque (10), une partie extérieure (12) et une partie intérieure (11) délimitées par ledit bord d'attaque (10),
- un panneau extérieur (4) prolongeant une partie extérieure (12) de la lèvre d'entrée d'air (1),
- une structure intérieure (3) prolongeant la partie intérieure (11) de la lèvre d'entrée d'air,
- un cadre avant (2) disposé à l'arrière de la lèvre d'entrée d'air (1), ledit cadre avant (2) comprenant un premier bord périphérique (21) lié à ladite partie extérieure (12) de la lèvre d'entrée d'air (1) et/ou au panneau extérieur (4), et un deuxième bord périphérique (22) lié à ladite structure intérieure (3) et/ou à ladite partie intérieure (11) de la lèvre d'entrée d'air, de sorte qu'un conduit de dégivrage (7) est formé en avant du cadre avant (2), dans ladite lèvre d'entrée d'air (1),
le cadre avant (2) étant conformé de sorte que le conduit de dégivrage (7) comporte une cavité principale (71), située directement en arrière du bord d'attaque (10), et une zone de transition thermique (72), ladite zone de transition thermique (72) étant formée en arrière de la cavité principale (71) entre une face interne (13) de la partie extérieure (12) de la lèvre d'entrée d'air (1) et ledit cadre avant (2), ladite zone de transition thermique (72) s'étendant sur une dimension longitudinale (D2) supérieure à sa dimension radiale (D1) moyenne, **caractérisé en ce que** le cadre avant (2) forme, vis-à-vis de la face interne (13) de la partie extérieure (12) de la lèvre d'entrée d'air (1) un angle mesuré longitudinalement compris entre -20° et +10° sur la majorité de la zone de transition thermique (72), un angle de 0° correspondant à une direction d'extension parallèle à ladite face interne (13), un angle positif correspondant à un éloignement, de l'avant vers l'arrière, du cadre avant (2) vis-à-vis de la face interne (13) et un angle négatif correspondant à un rapprochement, de l'avant vers l'arrière, du cadre avant (2) vis-à-vis de la face interne (13).

2. Partie antérieure de nacelle selon la revendication 1, dans laquelle le cadre avant (2) s'étend longitudinalement à distance de la face interne (13) de la partie extérieure (12) de la lèvre d'entrée d'air (1) sur une majorité de la dimension longitudinale (D2) de zone de transition thermique (72) avant de se rapprocher pour venir au contact de ladite face interne (13) de la partie extérieure (12) de la lèvre d'entrée d'air (1) à l'arrière de la zone de transition thermique (72).

3. Partie antérieure de nacelle selon la revendication 1 ou la revendication 2, dans laquelle la dimension longitudinale (D2) de la zone de transition thermique (72) est au moins deux fois supérieure à sa dimension radiale (D1) moyenne.

4. Partie antérieure de nacelle selon l'une des revendications 1 à 3, dans laquelle, le cadre avant (2) s'étend sensiblement parallèlement à la face interne (13) de la partie extérieure (12) de la lèvre d'entrée d'air (1) sur la majorité de la dimension longitudinale (D2) de la zone de transition thermique (72).

5. Partie antérieure de nacelle selon l'une des revendications 1 à 3, dans laquelle, le cadre avant (2) s'étend de la structure intérieure (3) jusqu'à proximité de la face interne (13) de la partie extérieure (12) de la lèvre d'entrée d'air (1), sans toutefois venir au contact de cette dernière, et, le long de la zone de transition thermique (72), s'écarte de ladite face interne (13) avant de s'en rapprocher de nouveau pour venir à son contact à l'arrière de la zone de transition thermique (72).

6. Partie antérieure de nacelle selon l'une des revendications précédentes, dans laquelle le cadre avant est en outre lié à la partie extérieure (12) de la lèvre d'entrée d'air (1) par des points de liaison régulièrement répartis sur la périphérie dudit cadre avant (2) au niveau d'une limite longitudinale entre la cavité principale (71) et la zone de transition thermique (72).

7. Partie antérieure selon l'une quelconque des revendications précédentes, dans laquelle la lèvre d'entrée d'air (1) et le cadre avant (2) sont métalliques, et le panneau extérieur (4) est en matériau composite ou en matériau hybride composite/métallique.

8. Partie antérieure de nacelle selon l'une des revendications précédentes, dans laquelle le cadre avant (2) est lié à la partie extérieure (12) de la lèvre d'entrée d'air (1) au niveau d'une interface de liaison entre ladite partie extérieure (12) de la lèvre d'entrée d'air (1) et ledit panneau extérieur (4).

9. Nacelle (N) de groupe propulsif d'aéronef comportant une partie antérieure (P1) conforme à l'une des revendications précédentes, comportant en outre des moyens de récupération d'air chaud au niveau d'un moteur équipant ladite nacelle, et d'introduction dudit air chaud dans le conduit de dégivrage (7).

## Patentansprüche

1. Vorderteil einer Gondel einer Antriebsgruppe eines Luftfahrzeugs (A), wobei der Vorderteil (P1) ein vorderes Ende, das den Lufteinlass ermöglicht, und ein hinteres Ende, das dazu bestimmt ist, mit dem Rest der Gondel verbunden zu werden, aufweist, wobei der Vorderteil umfasst:
- eine Lufteinlasslippe (1), die am vorderen Ende angeordnet ist und eine Vorderkante (10) sowie einen äußeren Teil (12) und einen inneren Teil (11), die von der Vorderkante (10) begrenzt werden, umfasst,
- ein äußeres Paneel (4), das einen äußeren Teil (12) der Lufteinlasslippe (1) verlängert,
- eine innere Struktur (3), die den inneren Teil (11) der Lufteinlasslippe verlängert,
- einen vorderen Rahmen (2), der hinten an der Lufteinlasslippe (1) angeordnet ist, wobei der vordere Rahmen (2) einen ersten Umfangsrand (21), der mit dem äußeren Teil (12) der Lufteinlasslippe (1) und/oder mit dem äußeren Paneel (4) verbunden ist, und einen zweiten Umfangsrand (22), der mit der inneren Struktur (3) und/oder mit dem inneren Teil (11) der Lufteinlasslippe verbunden ist, umfasst, so dass ein Enteisungskanal (7) vor dem vorderen Rahmen (2) in der Lufteinlasslippe (1) gebildet wird,
wobei der vordere Rahmen (2) derart ausgebildet ist, dass der Enteisungskanal (7) einen Haupthohlraum (71), der sich direkt hinter der Vorderkante (10) befindet, und einen thermischen Übergangsbereich (72) aufweist, wobei der thermische Übergangsbereich (72) hinter dem Haupthohlraum (71) zwischen einer Innenseite (13) des äußeren Teils (12) der Lufteinlasslippe (1) und dem vorderen Rahmen (2) ausgebildet ist, wobei sich der thermische Übergangsbereich (72) über eine Längsabmessung (D2) erstreckt, die größer als seine mittlere radiale Abmessung (D1) ist,
**dadurch gekennzeichnet, dass** der vordere Rahmen (2) bezüglich der Innenseite (13) des äußeren Teils (12) der Lufteinlasslippe (1) einen in Längsrichtung gemessenen Winkel zwischen -20° und +10° auf dem größten Teil des thermischen Übergangsbereichs (72) bildet, wobei ein Winkel von 0° einer zu der Innenseite (13) parallelen Erstreckungsrichtung entspricht, ein positiver Winkel einem von vorn nach hinten zunehmenden Abstand des vorderen Rahmens (2) von der Innenseite (13) entspricht und ein negativer Winkel einer von vorn nach hinten zunehmenden Annäherung des vorderen Rahmens (2) an die Innenseite (13) entspricht.

2. Vorderteil einer Gondel nach Anspruch 1, wobei sich der vordere Rahmen (2) in Längsrichtung auf einem größten Teil der Längsabmessung (D2) des thermischen Übergangsbereichs (72) in einem Abstand von der Innenseite (13) des äußeren Teils (12) der Lufteinlasslippe (1) erstreckt, bevor er sich annähert, um am hinteren Ende des thermischen Übergangsbereichs (72) mit der Innenseite (13) des äußeren Teils (12) der Lufteinlasslippe (1) in Kontakt zu kommen.

3. Vorderteil einer Gondel nach Anspruch 1 oder Anspruch 2, wobei die Längsabmessung (D2) des thermischen Übergangsbereichs (72) mindestens doppelt so groß wie seine mittlere radiale Abmessung (D1) ist.

4. Vorderteil einer Gondel nach einem der Ansprüche 1 bis 3, wobei sich der vordere Rahmen (2) auf dem größten Teil der Längsabmessung (D2) des thermischen Übergangsbereichs (72) im Wesentlichen parallel zur Innenseite (13) des äußeren Teils (12) der Lufteinlasslippe (1) erstreckt.

5. Vorderteil einer Gondel nach einem der Ansprüche 1 bis 3, wobei sich der vordere Rahmen (2) von der inneren Struktur (3) bis in die Nähe der Innenseite (13) des äußeren Teils (12) der Lufteinlasslippe (1) erstreckt, ohne jedoch mit dieser Letzteren in Kontakt zu kommen, und sich entlang des thermischen Übergangsbereichs (72) von der Innenseite (13) entfernt, bevor er sich ihr erneut nähert, um am hinteren Ende des thermischen Übergangsbereichs (72) mit ihr in Kontakt zu kommen.

6. Vorderteil einer Gondel nach einem der vorhergehenden Ansprüche, wobei der vordere Rahmen außerdem mit dem äußeren Teil (12) der Lufteinlasslippe (1) durch Verbindungspunkte verbunden ist, die an einer Längsgrenze zwischen dem Haupthohlraum (71) und dem thermischen Übergangsbereich (72) gleichmäßig auf dem Umfang des vorderen Rahmens (2) verteilt sind.

7. Vorderteil nach einem der vorhergehenden Ansprüche, wobei die Lufteinlasslippe (1) und der vordere Rahmen (2) metallisch sind und das äußere Paneel (4) aus einem Verbundwerkstoff oder aus einem Hybridmaterial Verbundwerkstoff/Metall besteht.

8. Vorderteil einer Gondel nach einem der vorhergehenden Ansprüche, wobei der vordere Rahmen (2) mit dem äußeren Teil (12) der Lufteinlasslippe (1) an einer Verbindungsschnittstelle zwischen dem äußeren Teil (12) der Lufteinlasslippe (1) und dem äußeren Paneel (4) verbunden ist.

9. Gondel (N) einer Antriebsgruppe eines Luftfahrzeugs, welche einen Vorderteil (P1) gemäß einem der vorhergehenden Ansprüche aufweist und außerdem Mittel zur Rückgewinnung von Heißluft an einem Triebwerk, mit dem die Gondel ausgestattet ist, und zur Einleitung dieser Heißluft in den Enteisungskanal (7) aufweist.

## Claims

1. Anterior part of a nacelle of a propulsion assembly of an aircraft (A), said anterior part (P1) having a front end allowing air to enter and a rear end intended to be connected to the rest of the nacelle, said anterior part comprising:
- an air intake lip (1) disposed at said front end and comprising a leading edge (10) and an outer part (12) and an inner part (11) that are delimited by said leading edge (10),
- an outer panel (4) extending an outer part (12) of the air intake lip (1),
- an inner structure (3) extending the inner part (11) of the air intake lip,
- a front frame (2) disposed at the rear of the air intake lip (1), said front frame (2) comprising a first peripheral edge (21) connected to said outer part (12) of the air intake lip (1) and/or to the outer panel (4), and a second peripheral edge (22) connected to said inner structure (3) and/or to said inner part (11) of the air intake lip, such that a de-icing duct (7) is formed in front of the front frame (2), in said air intake lip (1),
the front frame (2) being shaped such that the de-icing duct (7) has a main cavity (71), situated directly behind the leading edge (10), and a thermal transition region (72), said thermal transition region (72) being formed behind the main cavity (71) between an internal face (13) of the outer part (12) of the air intake lip (1) and said front frame (2), said thermal transition region (72) extending over a longitudinal dimension (D2) greater than its average radial dimension (D1), **characterized in that** the front frame (2) forms, with respect to the internal face (13) of the outer part (12) of the air intake lip (1), an angle, measured longitudinally, of between -20° and +10° over the majority of the thermal transition region (72), an angle of 0° corresponding to a direction of extension parallel to said internal face (13), a positive angle corresponding to the front frame (2) moving away from the internal face (13), from the front towards the rear, and a negative angle corresponding to the front frame (2) moving closer to the internal face (13), from the front towards the rear.

2. Anterior part of a nacelle according to Claim 1, wherein the front frame (2) extends longitudinally at a distance from the internal face (13) of the outer part (12) of the air intake lip (1) over a majority of the longitudinal dimension (D2) of the thermal transition region (72) before moving closer so as to come into contact with said internal face (13) of the outer part (12) of the air intake lip (1) at the rear of the thermal transition region (72) .

3. Anterior part of a nacelle according to Claim 1 or Claim 2, wherein the longitudinal dimension (D2) of the thermal transition region (72) is at least two times greater than its average radial dimension (D1).

4. Anterior part of a nacelle according to one of Claims 1 to 3, wherein the front frame (2) extends substantially parallel to the internal face (13) of the outer part (12) of the air intake lip (1) over the majority of the longitudinal dimension (D2) of the thermal transition region (72).

5. Anterior part of a nacelle according to one of Claims 1 to 3, wherein the front frame (2) extends from the inner structure (3) as far as the vicinity of the internal face (13) of the outer part (12) of the air intake lip (1), without however coming into contact therewith, and, along the thermal transition region (72), moves away from said internal face (13) before once again moving closer thereto so as to come into contact therewith at the rear of the thermal transition region (72).

6. Anterior part of a nacelle according to one of the preceding claims, wherein the front frame is also connected to the outer part (12) of the air intake lip (1) by connection points regularly distributed on the periphery of said front frame (2) at a longitudinal boundary between the main cavity (71) and the thermal transition region (72).

7. Anterior part according to any one of the preceding claims, wherein the air intake lip (1) and the front frame (2) are metallic, and the outer panel (4) is made from a composite material or a hybrid composite/metallic material.

8. Anterior part of a nacelle according to one of the preceding claims, wherein the front frame (2) is connected to the outer part (12) of the air intake lip (1) at a connection interface between said outer part (12) of the air intake lip (1) and said outer panel (4).

9. Nacelle (N) of an aircraft propulsion unit having an anterior part (P1) in accordance with one of the preceding claims, also having means for collecting hot air at an engine fitted in said nacelle, and for introducing said hot air into the de-icing duct (7).
